# EUROPEAN PATENT APPLICATION

(11) **EP 4 560 490 A1**
(43) Date of publication of application: **28.05.2025**
(21) Application number: 23842448.5
(22) Date of filing: 24.07.2023
(51) Int. Cl.: G06F 16/33, G06F 40/211, G06F 40/30, G06N 3/04, G06N 3/08

(54) **LANGUAGE ESCAPE METHOD AND APPARATUS, AND DEVICE AND STORAGE MEDIUM**

(30) Priority: 22.07.2022 CN 202210873471
(71) Applicant: Cloud Intelligence Assets Holding (Singapore) Private Limited, Singapore 189554 (SG)
(72) Inventor: FU, Han, Hangzhou, Zhejiang 310030 (CN); LIU, Chang, Hangzhou, Zhejiang 310030 (CN); WU, Bin, Hangzhou, Zhejiang 310030 (CN); TAN, Jian, Alma, CA 94085 (US); LI, Feifei, Hangzhou, Zhejiang 310030 (CN)
(74) Representative: Barker Brettell LLP
(86) International application number: PCT/CN2023/108849
(87) International publication number: WO 2024/017386

(57) **Abstract**

Embodiments of the present disclosure provide a language escape method, an apparatus, and a device and a storage medium. The method includes: splitting a target statement acquired to obtain at least one target substatement; determining a keyword type and a keyword clause contained in the target substatement; correcting the keyword clause in the target substatement according to a semantic constraint rule corresponding to the keyword type contained in the target substatement; and combining the corrected target substatement, and generating an executable machine language. The above method can effectively improve the accuracy of natural language escape and the work efficiency of a user using database query, and at the same time, reduce the technical ability requirements for the staff using database query.

## Description

The present disclosure claims priority to Chinese Patent Disclosure No. 202210873471.8, filed to China National Intellectual Property Administration on July 22, 2022 and entitled "LANGUAGE ESCAPE METHOD, APPARATUS, AND DEVICE AND STORAGE MEDIUM", which is hereby incorporated by reference in its entirety.

### TECHNICAL FIELD

The present disclosure relates to the field of computer technology, and in particular, to a natural language escape method, an apparatus, and a device and a storage medium.

### BACKGROUND

As a core foundation technology of many data services, database provides support for various data service requirements. In the management and use of the database, professional personnel are often required to participate in the use and interaction of the database.

In the prior art, although there are some technologies to implement the data query in the database through human natural language. For example, the user can input natural language into the neural network, and the neural network can output the corresponding query language (for example, Structured Query Language (Structured Query Language, SQL)). However, these query languages are not executable well.

### SUMMARY

In order to solve or improve the problems existing in the prior art, various embodiments of the present disclosure provide a language escape method, an apparatus, and a device and a storage medium.

In a first aspect, in an embodiment of the present disclosure, a language escape method is provided, including:
splitting a target statement acquired to obtain at least one target substatement;
determining a keyword type and a keyword clause contained in the target sub statement;
correcting the keyword clause in the target substatement according to a semantic constraint rule corresponding to the keyword type contained in the target substatement; and
combining the corrected target substatement, and generating an executable machine language.

In a second aspect, in an embodiment of the present disclosure, an electronic device inlcuding a memory and a processor is provided;
where the memory is configured to store a program;
the processor is coupled with the memory and configured to execute the program stored in the memory for implementing the language escape method described in the first aspect.

In a third aspect, in an embodiment of the present disclosure, a non-temporary machine-readable storage medium is provided, the non-temporary machine-readable storage medium stores an executable code, and when the executable code is executed by a processor of an electronic device, the processor executes the language escape method as described in the first aspect.

In a fourth aspect, in an embodiment of the present disclosure, a database system is provided, including:
an encoder, configured to encode an acquired natural language to obtain a semantic feature vector;
a decoder, configured to decode the semantic feature vector output by the encoder to generate a target statement;
a splitting module, configured to split the target statement acquired to obtain at least one target substatement;
a correction module, configured to correct a keyword clause in the target substatement according to a semantic constraint rule corresponding to a keyword type contained in the target substatement;
a combination module, configured to combine the corrected target substatement, and generate an executable machine language; and
a database, configured to execute a data query task based on the executable machine language.

In a technical scheme provided by embodiments of the present disclosure, when a user provides a natural language for query, an encoder can encode the natural language to obtain a semantic feature vector of the natural language. A decoder is used to further process the language feature vector, and obtain a target statement corresponding to the natural language that can be recognized by a database. The target statement is split to obtain a sequence containing at least one target substatement. Each target substatement contains a keyword. When the target substatement is corrected, based on the keyword type contained in the target substatement and a corresponding semantic constraint rule, the target substatement is corrected, and the corrected target substatement is combined to obtain a machine language that can be recognized by the database. The above method can effectively improve the accuracy of natural language escape and the work efficiency of a user using database query, and at the same time, reduce the technical ability requirements for the staff using database query.

### BRIEF DESCRIPTION OF DRAWINGS

In order to more clearly explain the technical scheme in the embodiments of the present disclosure or the prior art, the following is a brief introduction to the drawings required to be used in the description of the embodiments or the prior art. It is obvious that the drawings in the description below are some embodiments of the present disclosure. For ordinary persons skilled in the art, other drawings can also be obtained according to these drawings without creative labor.
FIG. 1 is a flow diagram of a language escape method provided by an embodiment of the present disclosure.
FIG. 2 is a structural diagram of a language escape system provided by an embodiment of the present disclosure.
FIG. 3 is a flow view of a method for splitting a target statement provided by an embodiment of the present disclosure.
FIG. 4 is a schematic diagram of a data table structure illustrated by an embodiment of the present disclosure.
FIG. 5 is a schematic diagram of a directed graph illustrated by an embodiment of the present disclosure.
FIG. 6 is a structural block diagram of a language escape apparatus provided by an embodiment of the present disclosure.
FIG. 7 is a structural diagram of an electronic device provided by an embodiment of the present disclosure.
FIG. 8 is a schematic diagram of a database system provided by an embodiment of the present disclosure.

### DESCRIPTION OF EMBODIMENTS

In order to enable personnel in the technical field to better understand the scheme of the present disclosure, the technical scheme in the embodiment of the disclosure will be clearly and completely described in combination with the drawings attached to the embodiment of the disclosure.

Some of the processes described in the specification, the claims, and the above drawings of the present disclosure contain multiple operations that occur in a particular order, which may be performed in a different order than in the order in which they occur herein, or in parallel. The sequence number of an operation, such as 101 and 102, is just used to distinguish different operations, the sequence number itself does not represent any execution order. In addition, these processes can include more or fewer operations, and these operations can be executed sequentially or in parallel. It should be noted that the "first" and "second" descriptions in this article are used to distinguish between different messages, devices, modules, etc., and do not represent the order, nor do they limit the "first" and "second" to be different types. In addition, the embodiments described below represent only a portion of the embodiments of the present disclosure and not all of them. Based on the embodiments in the present disclosure, all other embodiments obtained by a person skilled in the art without performing creative labor fall within the scope of protection in the present disclosure.

Database is a core infrastructure of most data services in an information industry, which needs support of the database in a process of data processing. At present, an end user and database operation and maintenance personnel still mainly interact with databases through database query machine languages (such as SQL, Gremlin, etc.), which requires the user to have strong database expertise, operation and maintenance experience, and have a deep understanding of relevant database instances. Therefore, in a process of database management, use, operation and maintenance, a large number of professional staff are required to participate in the database interaction work, and technical threshold is high, and labor cost is high. With the development of artificial intelligence technology, machine learning technology can be used to convert a natural language provided by the staff into machine language, so that the computer can understand the real intention of the staff and perform the corresponding task. However, in practical applications, the machine language obtained by using natural language processing, machine learning algorithm and other technologies to realize the escape of natural language to database query language (NL2SQL) often has some syntax errors, semantic errors and other problems, resulting in the database cannot execute the escaped machine language well. It also requires staff with a certain technical basis to adjust the obtained machine language before it can be successfully executed. Therefore, the scheme of the present disclosure proposes to optimize and adjust the escaped machine language, so as to realize the barrier-free interaction between the staff and the database through natural language. The escaped machine language is more accurate and easier to execute successfully. It can effectively reduce the technical ability requirements of staff, reduce the labor cost, and improve work efficiency.

In the technical scheme of the present disclosure, a specific working process will be described in the following embodiments.

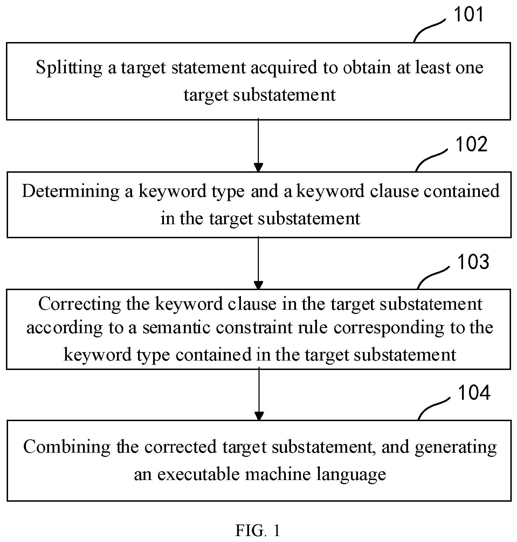

FIG. 1 is a flow diagram of a language escape method provided by an embodiment of the present disclosure. An execution subject of the language escape method can be a local computer, a cloud service device, etc. As shown in FIG. 1, the language escape method includes the following steps:
step 101: splitting a target statement acquired to obtain at least one target substatement;
step 102: determining a keyword type and a keyword clause contained in the target substatement;
step 103: correcting the keyword clause in the target substatement according to a semantic constraint rule corresponding to the keyword type contained in the target substatement; and
step 104: combining the corrected target substatement, and generating an executable machine language.

The target statement here can be understood a machine language (for example, SQL) that is encoded and decoded using an encoder and a decoder. In general, the target statement acquired may contain multiple target substatements with a nested relationship.

When correcting the target statement, it is necessary to split the target statement, so that the target substatement obtained after splitting do not have a nested relationship. In other words, if two target substatements is obtained after a splitting, and one target substatements also contains the nested relationship, the target substatement need to be further split until they no longer contain any nested relationship. The specific splitting process and splitting scheme will be illustrated in the following embodiments.

The keyword types mentioned here include: SELECT type, WHERE type, FROM type, HAVING type, ORDER BY type, GROUP BY type, LIMIT type, and so on. The keyword clauses mentioned here can be understood as sentences obtained by the association of keywords and their context. The target substatement may contain multiple keyword types and corresponding multiple keyword clauses at the same time. Keyword types can be defined and adjusted according to user needs, for example, a certain keyword type can be added or reduced.

It should be noted that different keyword types correspond to different semantic constraint rules. The semantic constraint rules mentioned here can be understood as semantic constraint rules of syntax used in different computer languages. For example, which types of operators can be supported by a value of a certain class, which nested relationships are supported by words or sentences, the position of an operator in a statement, and so on. In practical application, in order to obtain more accurate correction effect, the keyword clauses are used as the minimum correction unit to correct according to the semantic constraint rules. When correcting, it can be corrected according to logical relationship of each keyword in the target substatement, and it can also be corrected in order.

After correcting the keyword clause in each target substatement, the corrected target substatement is obtained, and then, multiple corrected target substatements are combined. When combining, it combines according to the nested relationship of the splitting to obtain a machine language (e.g., SQL, etc.).

In one or more embodiments of the present disclosure, the splitting the acquired target statement to obtain the at least one target substatement includes: decoding a semantic feature vector encoded based on a natural language provided by a user by using a decoder to obtain a target statement containing a keyword, an operation content and a predicted value; and splitting the target statement according to a nested relationship to generate the at least one target substatement without the nested relationship.

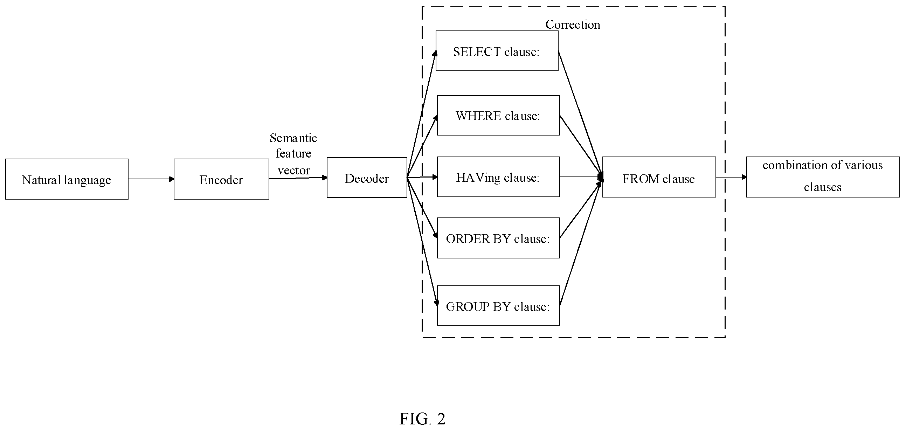

FIG. 2 is a structural diagram of a language escape system provided by an embodiment of the present disclosure. The overall architecture of the technical scheme of the present disclosure will be described below in conjunction with the attached FIG. 2. In the technical scheme of the present disclosure, two model encoders and decoders are included. Where the encoder model is usually composed of Long Short-Term Memory network (Long Short-Term Memory, LSTM), Transformer and other network structures, which converts the input natural language into a series of abstract semantic feature vectors. The decoder is usually constructed using another separate LSTM or Tree-LSTM. It should be noted that the encoders and decoders mentioned here are all pre-trained neural network models.

When a user or worker provides the natural language by way of spoken or written input (the natural language here usually means a language that naturally evolves with culture. For example, Chinese, English, Japanese, etc.), further input the natural language into the encoder in the form of text, and output the semantic feature vector.

After the encoder sends out the semantic feature vector, the semantic feature vector is input into the decoder, and the decoder further decodes the semantic feature vector to obtain the target statement. In the target statement, there is at least one keyword, an operator (e.g., =, !=, ==, etc.) and a predicted value (a value predicted using a machine learning model).

As mentioned above, after the target statement is obtained, the target statement will be further split, and an ultimate goal of the splitting is to make each target substatement no longer have the nested relationship. Of course, if the target statement does not contain any nested relationship, it cannot be split, the statement that does not have any nested relationship is processed as a substatement, and the keyword clauses are corrected according to the semantic constraint rule corresponding to the keyword types contained in it.

For example, a natural language question entered by a user would be: "Tell me what is the average life expectancy of people living in countries where the official language is not English?". A target statement SQL generated by directly using the decoder (e.g., neural network model) is: SELECT avg (life_expectancy) FROM country WHERE country_name! = (SELECT isofficial FROM country_language WHERE language ! = "English"). In the target statement, it can be seen that the keyword type includes: SELECT type, FROM type, and WHERE type. Where the keyword clause obtained in the outer target substatement is: SELECT avg (life_expectancy), FROM country, WHERE country_name! =. In the WHERE clause, the operator is! =, predicted value country_name.

After splitting the above target statement, two target substatements without nesting relationship are as follows: ①SELECT avg (life_expectancy) FROM country WHERE country_name != and ② SELECT isofficial FROM country_language WHERE language != "English".

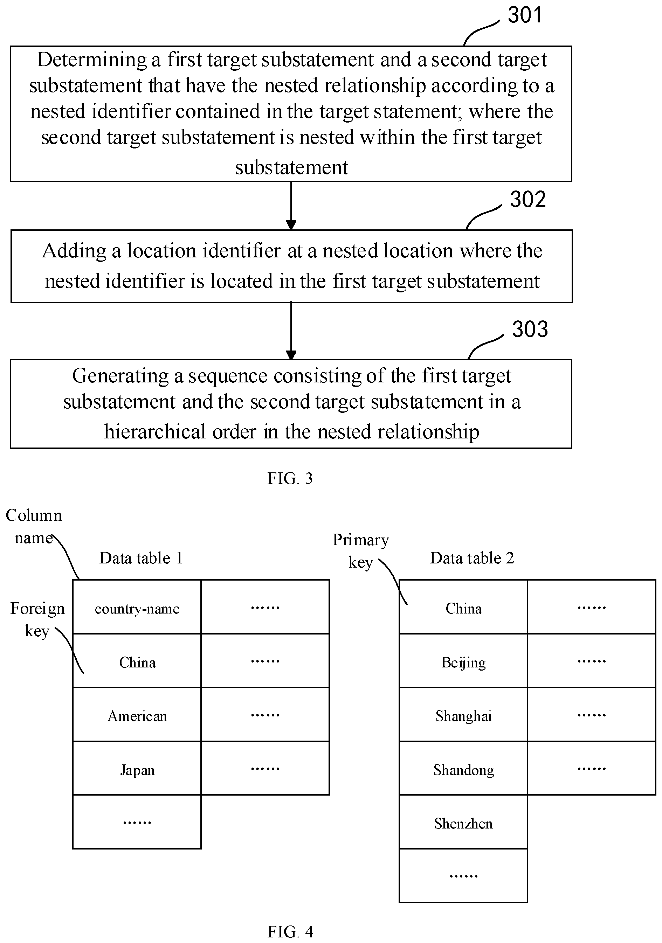

In one or more embodiments of the present disclosure, FIG. 3 is a flow view of a method for splitting a target statement provided by an embodiment of the present disclosure. As can be seen from FIG. 3, the splitting the target statement according to the nested relationship to generate the at least one target substatement without the nested relationship includes the following steps:
step 301: determining a first target substatement and a second target substatement that have the nested relationship according to a nested identifier contained in the target statement; where the second target substatement is nested within the first target substatement;
step 302: adding a location identifier at a nested location where the nested identifier is located in the first target substatement; and
step 303: generating a sequence consisting of the first target substatement and the second target substatement in a hierarchical order in the nested relationship.

In practice, when the target statement is split, it is split based on the nested identifier. The nested identifier can be a specific symbol, such as parentheses (), {}, etc.. It can also be a set operator, such as INTERSECT, UNION, EXCEPT, etc..

Since the second target sub statement is nested in the first target substatement, if the second target substatement is found to contain other substatements by checking the second target substatement, it is necessary to further split the second target substatement. Conversely, if the second target substatement no longer contains any nested content, no further splitting of the second target substatement is required.

Continuing to assume that there is no more nested relationship in the second target substatement, it need to add the location identifier at the location of the nested identifier in the first target substatement so that the first target substatement and the second target substatement can be combined later. In the combination, the corrected substatements need to be restored according to the previous nested relationship, so that the corrected first target substatement and the second target substatement need to be combined according to the location identifier.

After splitting, the first target substatement and the second target substatement can be obtained, and they can be further combined based on the hierarchical order in the nested relationship between the first target substatement and the second target substatement to obtain a substatement sequence.

For example, a natural language question entered by a user would be: "Tell me what is the average life expectancy of people living in countries where the official language is not English?". A target statement SQL generated by directly using the decoder (e.g., neural network model) is: SELECT avg (life_expectancy) FROM country WHERE country_name! = (SELECT isofficial FROM country_language WHERE language ! = "English"). In the target statement, it can be seen that the keyword type includes: SELECT type, FROM type, and WHERE type.

After splitting the above target statement, two target substatements without nesting relationship are as follows: ①SELECT avg (life_expectancy) FROM country WHERE country_name != and ② SELECT isofficial FROM country_language WHERE language != "English". Since the second target substatement is nested in the first target substatement, the sequence is [SELECT avg(life_expectancy) FROM country WHERE country_name != NESTEDVALUE, SELECT isofficial FROM country_language WHERE language != "English"]. NESTEDVALUE can be used as the location identifier.

However, the SQL statement cannot be executed because there are multiple syntax and semantic errors, the correct SQL should be: SELECT avg(life_expectancy) FROM country WHERE country_name not in (SELECT country _name FROM country_language WHERE language != "English" and isofficial = 1). The amendment process is specified in the following embodiments.

In one or more embodiments of the present disclosure, after the obtaining the at least one target substatement, the method further includes: determining the corresponding semantic constraint rule according to the keyword type contained in the target substatement.

Different keyword types have different syntax constraint rules for correcting keyword clauses. For example, if a predicted value in a WHERE clause is corrected, the similarity is calculated between the predicted value and a value in a data table stored in a database to determine whether the predicted value needs to be corrected. In a HAVING clause, in a case that an aggregate function matches a column name, different correction methods are adopted according to different types of the aggregate function. For example, if the aggregate function is max, min and other functions that keep the value type unchanged, the processing method can be to calculate the similarity between the predicted value and the value in the data table stored in the database to determine whether the predicted value needs to be corrected; if the aggregate function is count, avg, etc., and the aggregate result is a calculated value, the predicted value is replaced by a constant, for example, a predicted value single is replaced by 1. If no reasonable escape is possible, the HAVING clause can be abandoned.

It should be noted that when correcting, it is needed to use the database to perform correction. In an optional embodiment, the data table can be created in the database. FIG. 4 is a schematic diagram of a data table structure illustrated by an embodiment of the present disclosure. As you can see in FIG. 4, a column name, a value, etc. are stored in a data table 1. The column name can be set as required. For example, the column name is country _name, etc., and the corresponding value is China, American, and Japan. A column name and a value are stored in table 2. For example, the column name is city_name, country _name, ... , a corresponding first row value is: Beijing, China,... ; a corresponding second row value is: Shanghai, China,... ; a corresponding third row value is: New York, USA,... etc..

In one or more embodiments of the present disclosure, when the keyword type is SELECT type, the decoding the semantic feature vector encoded based on the natural language provided by the user by using the decoder to obtain the target statement containing the keyword, the operation content and the predicted value includes: acquiring a data table provided by a database; performing analysis on a matching degree between an operation content associated with the SELECT keyword obtained by decoding the semantic feature vector and a data column in the data table; determining a target data column matching the operation content from the data table according to the matching degree; and generating a target statement containing the SELECT keyword, the operation content, and the predicted value based on data in the target data column.

In order to obtain a more accurate decoding result in the decoding process, the decoder can analyze the matching degree between the decoded aggregate function and the column name in the data table. For example, if the column name varchar does not match the aggregate function max/min, a probability value of the matching degree can be set to zero. If the aggregate function max/min matches a column name, the corresponding probability value is set according to the matching degree. Then, from multiple columns, the one with the highest probability value is selected. The SELECT clause is generated according to the values and/or actions contained in the selected column.

In one or more embodiments of the present disclosure, when the keyword type is WHERE type. The decoding the semantic feature vector encoded based on the natural language provided by the user by using the decoder to obtain the target statement containing the keyword, the operation content and the predicted value includes: acquiring a data table provided by a database; screening out an operation content from the data table according to a predicted value associated to the WHERE keyword obtained by decoding the semantic feature information; and according to a matching degree between the predicted value and the screened operation content, determining the screened operation content matched with the predicted value to obtain a target statement containing the WHERE keyword, the predicted value and the screened operation content..

During the decoding process, if the WHERE clause is decoded, it contains the predicted value. The corresponding data table is selected according to the predicted value associated with the WHERE keyword, and then the matching degree between the predicted value and the operator in the data table is calculated. If there is no match, set the probability value of the position of the data column in the corresponding data table to zero. Then, the predicted value is matched with the operators in other data columns, and the data column with high probability value is selected to get a desired WHERE clause. In practical application, when the matching degree between the predicted value and the operator is calculated, the operator can be further restricted according to the type of the predicted value. For example, if the obtained predicted value is a string abc, then the range of qualified operators is {=, <>, like, not like}, and the probability values of positions of other types of operators are set to 0.

The following will be combined with specific embodiments to explain the correction process of keyword clauses corresponding to various keyword types.

When the keyword type is the WHERE type, if the predicted value is a non-nested value, a first similarity value between a first feature vector of the predicted value and a second feature vector of any value in a first data column of the data table is calculated; and if the first similarity value is greater than a first threshold, the predicted value is replaced by the any value to obtain the corrected target substatement. If the similarity value is less than the first threshold, a second similarity value between a third feature vector of any value in any column in the data table except the first data column and the first feature vector is calculated; if the second similarity value is greater than a second threshold, the predicted value is replaced by the any value in the any column to obtain the corrected target substatement.

For example, when the predicted value in the WHERE clause is a non-nested value, such as a string, the corresponding word2vec vector is acquired, and cosine similarity is calculated with the word2vec vector of all values in the corresponding data column in the data table, and the maximum value of the cosine similarity is found. If the maximum cosine similarity is greater than the first threshold M1, the predicted value is replaced by the value in the data table; if the cosine similarity values of all values in the corresponding data column in the data table and the predicted value are less than the first threshold value M1, then the values of other data columns in the data table are compared; if the cosine similarity of the value of a data column and the predicted value is greater than the second threshold value M2, the predicted value is replaced by the value in the data column, and the column name in the WHERE clause is corrected to the column name of the data stream. If the cosine similarity of all values and the predicted value is less than M2, the original statement is maintained unchanged.

When the keyword type is HAVING type, and if an execution result of performing the operation content is a numerical constant, the predicted value in a HAVING clause is replaced by a constant. For example, when the operation content is the aggregate function count, avg, etc., and the execution result obtained after the execution of the aggregate function is a constant in numerical form, the predicted value that has a context relationship with the operation content (the aggregate function) can be replaced by a constant (for example, 1) when correcting.

When the operation content does not change the predicted value, if the predicted value is a non-nested value, a first similarity value between a first feature vector of the predicted value and a second feature vector of any value in a first data column of the data table is calculated; and if the first similarity value is greater than a first threshold, the predicted value is replaced by the any value to obtain the corrected target substatement. If the similarity value is less than the first threshold, a second similarity value between a third feature vector of any value in any column in the data table except the first data column and the first feature vector is calculated; if the second similarity value is greater than a second threshold, the predicted value is replaced by the any value in the any column to obtain the corrected target substatement.

For example, if the aggregate function in the HAVING clause is a function that keeps type unchanged, such as max, min, etc., the word2vec vector of the predicted value (for example, string abc) is calculated, and the cosine similarity is calculated with the word2vec vector of all values in the corresponding data column in the data table, and the maximum value of the cosine similarity values after calculating is found. If the maximum value of the cosine similarity is greater than the first threshold M1, the predicted value is replaced by the value in the data table; if the cosine similarity values of all values in the corresponding data column in the data table and the predicted value are less than the first threshold value M1, then the values of other data columns in the data table are compared; if the cosine similarity of the value of a data column and the predicted value is greater than the second threshold value M2, the predicted value is replaced by the value in the data column, and the column name in the WHERE clause is corrected to the column name of the data stream. If the cosine similarity of all values and the predicted value is less than M2, the original statement is maintained unchanged.

In one or more embodiments of the present disclosure, the correcting the keyword clause in the target substatement according to the semantic constraint rule corresponding to the keyword type contained in the target substatement includes: when the keyword type is ORDER BY type, and if any clause in the target substatement other than an ORDER BY clause contains an aggregate function, converting the ORDER BY clause to a nested query statement.

ORDER BY is used to sort a query result. When correcting the ORDER BY clause, it need to check whether other keyword clauses in the current target substatement contain an aggregate function and whether the ORDER BY clause contains an aggregate function. If other keyword clauses in the target substatement do not have an aggregate function, or if other keyword clauses in the target substatement have an aggregate function and a GROUP BY statement as well as the ORDER BY clause, it can do no correction to the ORDER BY clause.

If other keyword clauses in the target substatements except the ORDER BY clause contain an aggregate function, then correction is required. For example, if another clause contains an aggregate function, it is converted into a nested query, a conversion rule is: adding a clause to a part of the WHERE clause of the form WHERE c = (SELECT c ORDER BY c), where c is a column name in an original ORDER BY statement. If the ORDER BY contains an aggregate function and does not have a GROUP BY statement, the ORDER BY statement is deleted.

In one or more embodiments of the present disclosure, the correcting the keyword clause in the target substatement according to the semantic constraint rule corresponding to the keyword type contained in the target substatement includes: when the keyword type is GROUP BY type, and if a SELECT clause does not contain an aggregate function and a column name of a data column corresponding to a GROUP BY clause, replacing the column name of the GROUP BY by a primary key; and copying a data column corresponding to the SELECT clause to the data column corresponding to the GROUP BY if the primary key is not found.

As mentioned above, in order to improve the speed and efficiency of escaping natural language, a data table is pre-created for storing data columns in the data table, including a column name and multiple values. Some of these values can be used as foreign keys, and at the same time as the primary key of another data table, so as to facilitate the strengthening of the link between the two data tables, and facilitate the search and management of data. As shown in FIG. 4, in Table 1, country _name is a primary key of Table 1, while country_name is a foreign key of table 2, where the primary key and foreign key is essentially the same column here (relational database). Thus, data table 1 is associated with data table 2.

For example, if there is a column name in the SELECT clause that does not contain an aggregate function and does not appear in GROUP BY, the column name of the GROUP BY is replaced by a Unique Key (such as a primary key, etc.). If there is no Unique Key, a column in the SELECT clause is copied into the GROUP BY clause.

In one or more embodiments of the present disclosure, when the keyword type is FROM type, a directed graph is generated based on a data table corresponding to the corrected target substatement and the data column therein; and a minimum spanning tree is constructed with the data column or a foreign key as a root node based on the data table and the data column in the directed graph.

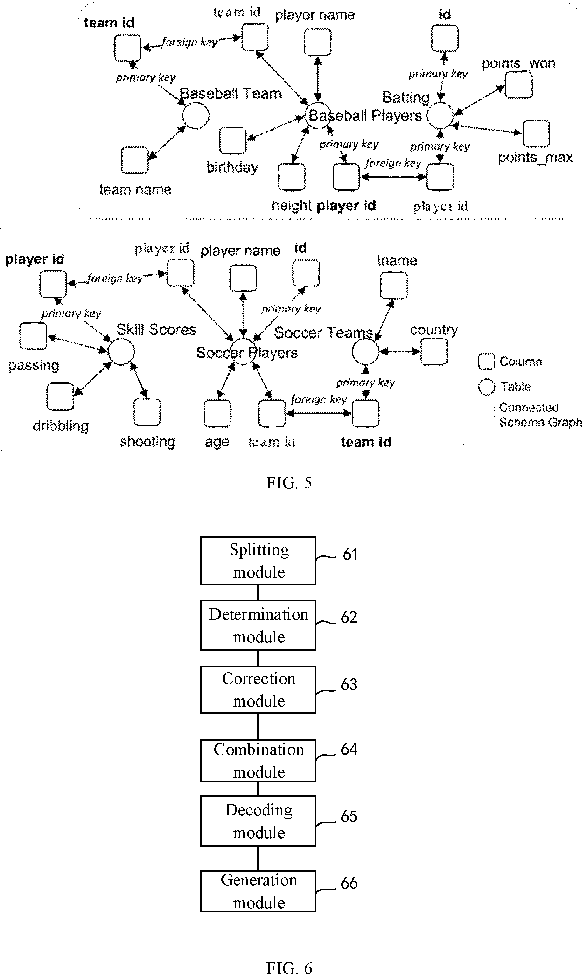

For example, FIG. 5 is a schematic diagram of a directed graph illustrated by an embodiment of the present disclosure. As can be seen from FIG. 5, a relational schema graph (Schema Graph) is first constructed. Each node in the relational schema graph is a table or column. The standard relational schema is a directed graph with four forms of edges:
a. a start node is a column, and an end node is a table to which the column belongs
b. a start node is a foreign key, and an end node is a corresponding primary key
c. an edge opposite to a
d. an edge opposite b

A table name in a FROM clause predicted by the decoder and a table that all other keyword clauses refer to are constructed to the minimum spanning tree as nodes. In order to avoid ambiguity, edges used in the tree are only in the form of a and b. After the tree is obtained, it needs to be further pruned, and all the tables with an outness of 0 in the spanning tree are continuously deleted until the outness of all the tables in the tree is greater than 0.

In one or more embodiments of the present disclosure, the combining the corrected target substatement includes: combining the corrected target substatement if a SELECT clause and a WHERE clause in the corrected target substatement have a same column name or a primary foreign key relationship; or, copying a column name corresponding to the WHERE clause to the SELECT clause to combine the corrected target substatement if the SELECT clause and the WHERE clause in the corrected target substatement do not have the same column name or the primary foreign key relationship.

For example, after correcting each keyword clause in the target statement, the corrected keyword statements are further recombined to obtain the corrected target statement. For nested queries inner SQL in the WHERE clause, it needs to ensure that the column name of the SELECT clause is the same as the column name of the outer condition (WHERE clause) or that there is a primary-foreign key relationship. If the above condition is not met, the outer column name is copied to the inner SELECT clause. In particular, if the column in the inner SELECT clause is boolean property, a condition is added to the inner WHERE clause: WHERE c = 1, where c is a column name of the boolean property. When combining, it can be combined according to the location identifier marked at the time of splitting, which can effectively improve the combination efficiency.

In order to facilitate understanding, this scheme will be illustrated by specific embodiments below.

First, SQL is directly predicted using a pre-trained neural network model in the encoder and decoder: SELECT avg (life_expectancy) FROM country WHERE country_name! = (SELECT isofficial FROM country_language WHERE language ! =

```
"English") will be split into sequences:
          [
          SELECT avg(life_expectancy) FROM country WHERE country _name ! =
          NESTEDVALUE,
          SELECT isofficial FROM country_language WHERE language ! =
 "English"
          ]
```

Each keyword clause in the first target substatement in the sequence is processed, where != in country_name != NESTEDVALUE in WHERE clause, because the operator does not match the value type, so != will be repredicted as not in.

Each keyword clause in the second target substatement in the sequence is processed, where the value "English" in language != "English" in WHERE clause is replaced by "English" by word vector similarity calculation.

Two corrected keyword clauses are concatenated, where isofficial in the inner SELECT clause is different from the column name country_name in an outer condition and does not have a primary and foreign key relationship, so copy country_name to the inner SELECT clause. And since isofficial is a boolean type, the condition isofficial=1 is added into the inner WHERE clause.

The resulting corrected target statement, which is the machine language that can be executed by the computer: SELECT avg(life_expectancy) FROM country WHERE country _name not in (SELECT country _name FROM country_language WHERE language != "English" and isofficial = 1). Through the above way, the SQL statement obtained by encoding and decoding is split, and then, the keyword clauses obtained by splitting are corrected. Because each keyword has its own execution semantic constraint rule, the rule is determined by the characteristics of machine language, and the rule is not available in the natural language, and cannot be directly obtained through the escape of natural statements. In addition, because the rule does not have strong regularity, there are many types of keywords, which cannot be learned by the neural network model. Therefore, in order to ensure that the SQL statement can be executed correctly, the value in each keyword clause is corrected one by one, making the correction effect more accurate.

Based on the same idea, an embodiment of the present disclosure also provides a language escape apparatus. FIG. 6 is a structural block diagram of a language escape apparatus provided by an embodiment of the present disclosure. The language escape apparatus includes:
a splitting module 61, configured to split a target statement acquired to obtain at least one target substatement;
a determination module 62, configured to determine a keyword type and a keyword clause contained in the target substatement;
a correction module 63, configured to correct the keyword clause in the target substatement according to a semantic constraint rule corresponding to the keyword type contained in the target substatement; and
a combination module 64, configured to combine the corrected target substatement, and generate an executable machine language.

Optionally, the splitting module 61 is configured to decode a semantic feature vector encoded based on a natural language provided by a user by using a decoder to obtain a target statement containing a keyword, an operation content and a predicted value; and
split the target statement according to a nested relationship to generate the at least one target substatement without the nested relationship.

Optionally, the splitting module 61 is configured to determine a first target substatement and a second target substatement that have the nested relationship according to a nested identifier contained in the target statement; where the second target substatement is nested within the first target substatement;
add a location identifier at a nested location where the nested identifier is located in the first target substatement; and
generate a sequence consisting of the first target substatement and the second target substatement in a hierarchical order in the nested relationship.

Optionally, the determination module 62 is further configured to determine the corresponding semantic constraint rule according to the keyword type contained in the target substatement.

Optionally, the language escape apparatus further includes a decoding module 65, when the keyword type is SELECT type;
the decoding module 65 is configured to acquire a data table provided by a database;
perform analysis on a matching degree between an operation content associated with the SELECT keyword obtained by decoding the semantic feature vector and a data column in the data table;
determine a target data column matching the operation content from the data table according to the matching degree; and
generate a target statement containing the SELECT keyword, the operation content, and the predicted value based on data in the target data column.

Optionally, when the keyword type is WHERE type;
the decoding module 65 is configured to acquire a data table provided by a database;
screen out an operation content from the data table according to a predicted value associated to the WHERE keyword obtained by decoding the semantic feature information; and
according to a matching degree between the predicted value and the screened operation content, determine the screened operation content matched with the predicted value to obtain a target statement containing the WHERE keyword, the predicted value and the screened operation content.

The correction module 63 is configured to, when the keyword type is HAVING type, and if an execution result of performing the operation content is a numerical constant, replace the predicted value in a HAVING clause by a constant.

The correction module 63 is configured to, if the predicted value is a non-nested value, calculatw a first similarity value between a first feature vector of the predicted value and a second feature vector of any value in a first data column of the data table; and
if the first similarity value is greater than a first threshold, replace the predicted value by the any value to obtain the corrected target substatement.

The correction module 63 is configured to, if the similarity value is less than the first threshold, calculate a second similarity value between a third feature vector of any value in any column in the data table except the first data column and the first feature vector; and
if the second similarity value is greater than a second threshold, replace the predicted value by the any value in the any column to obtain the corrected target substatement.

The correction module 63, configured to, when the keyword type is ORDER BY type, and if any clause in the target substatement other than an ORDER BY clause contains an aggregate function, convert the ORDER BY clause to a nested query statement.

The correction module 63, configured to, when the keyword type is GROUP BY type, and if a SELECT clause does not contain an aggregate function and a column name of a data column corresponding to a GROUP BY clause, replace the column name of the GROUP BY by a primary key; and
copy a data column corresponding to the SELECT clause to the data column corresponding to the GROUP BY if the primary key is not found.

Optionally, the language escape apparatus further includes a generation module 66, configured to, when the keyword type is FROM type, generate a directed graph based on a data table corresponding to the corrected target substatement and the data column therein; and
construct a minimum spanning tree with the data column or a foreign key as a root node based on the data table and the data column in the directed graph.

Optionally, a combination module 64 is configured to combine the corrected target substatement if a SELECT clause and a WHERE clause in the corrected target substatement have a same column name or a primary foreign key relationship; or, copy a column name corresponding to the WHERE clause to the SELECT clause to combine the corrected target substatement if the SELECT clause and the WHERE clause in the corrected target substatement do not have the same column name or the primary foreign key relationship.

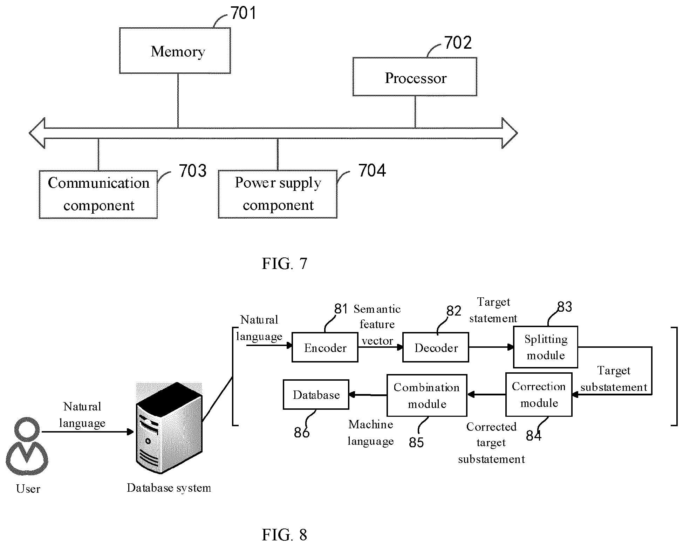

An embodiment of the present disclosure also provides an electronic device. FIG. 7 is a structural diagram of an electronic device provided by an embodiment of the present disclosure. The electronic device includes a memory 701, a processor 702 and a communication component 703;
where the memory 701 is configured to store a program;
the processor 702 is coupled with the memory and configured to execute the program stored in the memory for:
   splitting a target statement acquired to obtain at least one target substatement;
   determining a keyword type and a keyword clause contained in the target sub statement;
   correcting the keyword clause in the target substatement according to a semantic constraint rule corresponding to the keyword type contained in the target substatement; and
   combining the corrected target substatement, and generating an executable machine language.

Optionally, a processor 702 is configured to decode a semantic feature vector encoded based on a natural language provided by a user by using a decoder to obtain a target statement containing a keyword, an operation content and a predicted value; and
split the target statement according to a nested relationship to generate the at least one target substatement without the nested relationship.

Optionally, the processor 702 is configured to determine a first target substatement and a second target substatement that have the nested relationship according to a nested identifier contained in the target statement; where the second target substatement is nested within the first target substatement;
add a location identifier at a nested location where the nested identifier is located in the first target substatement; and
generate a sequence consisting of the first target substatement and the second target substatement in a hierarchical order in the nested relationship.

Optionally, the processor 702 is configured to determine the corresponding semantic constraint rule according to the keyword type contained in the target substatement.

Optionally, when the keyword type is SELECT type, the processor 702 is configured to obtain the data table provided by the database;
perform analysis on a matching degree between an operation content associated with the SELECT keyword obtained by decoding the semantic feature vector and a data column in the data table;
determine a target data column matching the operation content from the data table according to the matching degree; and
generate a target statement containing the SELECT keyword, the operation content, and the predicted value based on data in the target data column.

Optionally, when the keyword type is WHERE type;
the processor 702 is configured to acquire a data table provided by a database;
screen out an operation content from the data table according to a predicted value associated to the WHERE keyword obtained by decoding the semantic feature information; and
according to a matching degree between the predicted value and the screened operation content, determine the screened operation content matched with the predicted value to obtain a target statement containing the WHERE keyword, the predicted value and the screened operation content.

The processor 702 is configured to, when the keyword type is HAVING type, and if an execution result of performing the operation content is a numerical constant, replace the predicted value in a HAVING clause by a constant.

The processor 702 is configured to, if the predicted value is a non-nested value, calculate a first similarity value between a first feature vector of the predicted value and a second feature vector of any value in a first data column of the data table; and
if the first similarity value is greater than a first threshold, replace the predicted value by the any value to obtain the corrected target substatement.

The processor 702 is configured to, if the similarity value is less than the first threshold, calculate a second similarity value between a third feature vector of any value in any column in the data table except the first data column and the first feature vector; and
if the second similarity value is greater than a second threshold, replace the predicted value by the any value in the any column to obtain the corrected target substatement.

The processor 702 is configured to, when the keyword type is ORDER BY type, and if any clause in the target substatement other than an ORDER BY clause contains an aggregate function, convert the ORDER BY clause to a nested query statement.

The processor 702 is configured to, when the keyword type is GROUP BY type, and if a SELECT clause does not contain an aggregate function and a column name of a data column corresponding to a GROUP BY clause, replace the column name of the GROUP BY by a primary key; and
copy a data column corresponding to the SELECT clause to the data column corresponding to the GROUP BY if the primary key is not found.

The processor 702 is configured to, when the keyword type is FROM type, generate a directed graph based on a data table corresponding to the corrected target substatement and the data column therein; and
construct a minimum spanning tree with the data column or a foreign key as a root node based on the data table and the data column in the directed graph.

The processor 702 is configured to combine the corrected target substatement if a SELECT clause and a WHERE clause in the corrected target substatement have a same column name or a primary foreign key relationship; or,
copy a column name corresponding to the WHERE clause to the SELECT clause to combine the corrected target substatement if the SELECT clause and the WHERE clause in the corrected target substatement do not have the same column name or the primary foreign key relationship.

The memory 701 can be configured to store various other data to support operation on an electronic device. Examples of such data include instructions for any application or method used to operate on the electronic device. Memory can be implemented by any type of volatile or non-volatile storage device or a combination of them, such as a static random access memory (SRAM), electrically erasable programmable read-only memory (EEPROM), erasable programmable read-only memory (EPROM), programmable read-only memory (PROM), read-only memory (ROM), magnetic memory, flash memory, disk or CD and so on.

Further, the processor 702 in the embodiment may specifically be: a programmable switching processing chip configured with a data replication engine capable of replicating received data.

In addition to the above functions, the processor 702 can realize other functions when executing programs in the memory, as described in the preceding embodiments. Further, as shown in FIG. 7, the electronic device also includes: power supply component 704 and other components.

An embodiment of the present disclosure also provides a non-temporary machine readable storage medium, where the non-temporary machine readable storage medium stored executable codes, and when the executable codes are executed by a processor of an electronic device, the processor executes the method described in an embodiment corresponding to FIG. 1.

An embodiment of the present disclosure also provides a computer program product, including a computer program/instruction, when the computer program/instruction is executed by a processor, enables the processor to implement the method described in an embodiment corresponding to FIG. 1.

FIG. 8 is a schematic diagram of a database system provided by an embodiment of the present disclosure. As can be seen from FIG. 8, the system includes:
an encoder 81, configured to encode an acquired natural language to obtain a semantic feature vector;
a decoder 82, configured to decode the semantic feature vector output by the encoder to generate a target statement;
a splitting module 83, configured to split the target statement acquired to obtain at least one target substatement;
a correction module 84, configured to correct a keyword clause in the target substatement according to a semantic constraint rule corresponding to a keyword type contained in the target substatement;
a combination module 85, configured to combine the corrected target substatement, and generate an executable machine language; and
a database 86, configured to execute a data query task based on the executable machine language.

In practical application, the encoder 81 acquires the semantic feature vector encoded based on the natural language provided by a user; the decoder 82 is used to decode the semantic feature vector provided by the encoder 81 to obtain an unexecutable target statement. Then, the target statement is split by the splitting module 83 to obtain the at least one target substatement. The at least one target substatement is sent to the correction module 84 to correct the target substatement according to the semantic constraint rule corresponding to the keyword type contained in a target substatement sequence. The corrected target substatements are combined by the combination module 85 to generate the machine language corresponding to the natural language. After receiving the executable machine language, the database 86 executes the corresponding data query task and feedbacks a query result to the user. Of course, in practical applications, the encoder, the decoder, the splitting module, the correction module and the combination module can be integrated in one working node, and the database works as a separate node; of course, it is also possible to integrate all modules and databases in the same local server or cloud server.

Based on the above embodiment, when a user provides a natural language for query, an encoder can encode the natural language to obtain a semantic feature vector of the natural language. A decoder is used to further process the language feature vector, and obtain a target statement corresponding to the natural language that can be recognized by a database. The target statement is split to obtain a sequence containing at least one target substatement. Each target substatement contains a keyword. When the target substatement is corrected, based on the keyword type contained in the target substatement and a corresponding semantic constraint rule, the target substatement is corrected, and the corrected target substatement is combined to obtain a machine language that can be recognized by the database. The above method can effectively improve the accuracy of natural language escape and the work efficiency of a user using database query, and at the same time, reduce the technical ability requirements for the staff using database query.

Because each keyword has its own execution semantic constraint rule, the rule is determined by the characteristics of machine language, and the rule is not available in the natural language, and cannot be directly obtained through the escape of natural statements. In addition, because the rule does not have strong regularity, there are many types of keywords, which cannot be learned by the neural network model. Therefore, in order to ensure that the SQL statement can be executed correctly, the value in each keyword clause is corrected one by one, making the correction effect more accurate.

The apparatus embodiments described above are schematic only, where the units described as separate components may or may not be physically separate, and the components shown as units may or may not be physical units, that is, may be located in one place, or may be distributed over multiple network units. Some or all of the modules can be selected according to the actual requirements to realize the purpose of the scheme of the embodiment. It can be understood and implemented by ordinary persons skilled in the art without creative labor.

By the above description of implementations, those skilled in the art can clearly understand that various implementations can be implemented by means of software plus necessary common hardware platform, and of course by hardware. Based on this understanding, the above technical scheme in nature, or part that contributes to the prior art can be manifested in the form of a software product, the computer software product can be stored in a computer readable storage medium, such as ROM/RAM, disk, CD, etc., including several instructions to make a computer device (can be a personal computer, server, or a network device, etc.) to perform the methods described in each embodiment or some portion of the embodiment.

Finally, it should be noted that the above embodiments are used only to illustrate the technical scheme of the present disclosure, and not to restrict it; Notwithstanding the present disclosure is described in detail by reference to the foregoing embodiments, ordinary persons skilled in the art should understand that they may correct the technical scheme recorded in the foregoing embodiments or make equivalent substitutions for some of the technical features; such correction or replacement shall not remove the essence of the corresponding technical scheme from the spirit and scope of the technical scheme in each embodiment of the present disclosure.

## Claims

1. A language escape method, comprising:
splitting a target statement acquired to obtain at least one target substatement;
determining a keyword type and a keyword clause contained in the target substatement;
correcting the keyword clause in the target substatement according to a semantic constraint rule corresponding to the keyword type contained in the target substatement; and
combining the corrected target substatement, and generating an executable machine language.

2. The method according to claim 1, wherein the splitting the acquired target statement to obtain the at least one target substatement comprises:
decoding a semantic feature vector encoded based on a natural language provided by a user by using a decoder to obtain a target statement containing a keyword, an operation content and a predicted value; and
splitting the target statement according to a nested relationship to generate the at least one target substatement without the nested relationship.

3. The method according to claim 2, wherein the splitting the target statement according to the nested relationship to generate the at least one target substatement without the nested relationship comprises:
determining a first target substatement and a second target substatement that have the nested relationship according to a nested identifier contained in the target statement; wherein the second target substatement is nested within the first target substatement;
adding a location identifier at a nested location where the nested identifier is located in the first target substatement; and
generating a sequence consisting of the first target substatement and the second target substatement in a hierarchical order in the nested relationship.

4. The method according to claim 2, after the obtaining the at least one target substatement, further comprising:
determining the corresponding semantic constraint rule according to the keyword type contained in the target substatement.

5. The method according to claim 2, wherein when the keyword type is SELECT type;
the decoding the semantic feature vector encoded based on the natural language provided by the user by using the decoder to obtain the target statement containing the keyword, the operation content and the predicted value comprises:
acquiring a data table provided by a database;
performing analysis on a matching degree between an operation content associated with the SELECT keyword obtained by decoding the semantic feature vector and a data column in the data table;
determining a target data column matching the operation content from the data table according to the matching degree; and
generating a target statement containing the SELECT keyword, the operation content, and the predicted value based on data in the target data column.

6. The method according to claim 2, wherein when the keyword type is WHERE type;
the decoding the semantic feature vector encoded based on the natural language provided by the user by using the decoder to obtain the target statement containing the keyword, the operation content and the predicted value comprises:
acquiring a data table provided by a database;
screening out an operation content from the data table according to a predicted value associated to the WHERE keyword obtained by decoding the semantic feature information; and
according to a matching degree between the predicted value and the screened operation content, determining the screened operation content matched with the predicted value to obtain a target statement containing the WHERE keyword, the predicted value and the screened operation content.

7. The method according to claim 4, wherein the correcting the keyword clause in the target substatement according to the semantic constraint rule corresponding to the keyword type contained in the target substatement comprises:
when the keyword type is HAVING type, and if an execution result of performing the operation content is a numerical constant, replacing the predicted value in a HAVING clause by a constant.

8. The method according to any one of claims 1 to 7, wherein the correcting the keyword clause in the target substatement according to the semantic constraint rule corresponding to the keyword type contained in the target substatement comprises:
if the predicted value is a non-nested value, calculating a first similarity value between a first feature vector of the predicted value and a second feature vector of any value in a first data column of the data table; and
if the first similarity value is greater than a first threshold, replacing the predicted value by the any value to obtain the corrected target substatement.

9. The method according to claim 8, further comprising:
if the similarity value is less than the first threshold, calculating a second similarity value between a third feature vector of any value in any column in the data table except the first data column and the first feature vector; and
if the second similarity value is greater than a second threshold, replacing the predicted value by the any value in the any column to obtain the corrected target substatement.

10. The method according to claim 5 or 6, wherein the correcting the keyword clause in the target substatement according to the semantic constraint rule corresponding to the keyword type contained in the target substatement comprises:
when the keyword type is ORDER BY type, and if any clause in the target substatement other than an ORDER BY clause contains an aggregate function, converting the ORDER BY clause to a nested query statement.

11. The method according to claim 5 or 6, wherein the correcting the keyword clause in the target substatement according to the semantic constraint rule corresponding to the keyword type contained in the target substatement comprises:
when the keyword type is GROUP BY type, and if a SELECT clause does not contain an aggregate function and a column name of a data column corresponding to a GROUP BY clause, replacing the column name of the GROUP BY by a primary key; and
copying a data column corresponding to the SELECT clause to the data column corresponding to the GROUP BY if the primary key is not found.

12. The method according to claim 5 or 6, further comprising:
when the keyword type is FROM type, generating a directed graph based on a data table corresponding to the corrected target substatement and the data column therein; and
constructing a minimum spanning tree with the data column or a foreign key as a root node based on the data table and the data column in the directed graph.

13. The method according to claim 5 or 6, wherein the combining the corrected target substatement comprises:
combining the corrected target substatement if a SELECT clause and a WHERE clause in the corrected target substatement have a same column name or a primary foreign key relationship; or,
copying a column name corresponding to the WHERE clause to the SELECT clause to combine the corrected target substatement if the SELECT clause and the WHERE clause in the corrected target substatement do not have the same column name or the primary foreign key relationship.

14. An electronic device, comprising a memory and a processor;
wherein the memory is configured to store a program;
the processor is coupled with the memory and configured to execute the program stored in the memory for implementing the method according to any one of claims 1 to 13.

15. A non-transitory machine-readable storage medium, wherein the non-transitory machine-readable storage medium stores an executable code, and when the executable code is executed by a processor of an electronic device, the processor executes the method according to any one of claims 1 to 13.

16. A database system, comprising:
an encoder, configured to encode an acquired natural language to obtain a semantic feature vector;
a decoder, configured to decode the semantic feature vector output by the encoder to generate a target statement;
a splitting module, configured to split the target statement acquired to obtain at least one target substatement;
a correction module, configured to correct a keyword clause in the target substatement according to a semantic constraint rule corresponding to a keyword type contained in the target substatement;
a combination module, configured to combine the corrected target substatement, and generate an executable machine language; and
a database, configured to execute a data query task based on the executable machine language.
